# EUROPEAN PATENT APPLICATION

(11) **EP 3 869 226 A1**
(43) Date of publication of application: **25.08.2021**
(21) Application number: 21155342.5
(22) Date of filing: 04.02.2021
(51) Int. Cl.: G01S 13/75, G01S 13/89, G01S 13/86

(54) **MILLIMETER-WAVE RADAR IMAGING DEVICE AND METHOD**

(30) Priority: 19.02.2020 US 202016795046
(71) Applicant: Palo Alto Research Center Incorporated, Webster, NY 14580 (US)
(72) Inventor: INANLOU, Farzad Michael David, Redwood City, California 94304 (US); SCHWARTZ, David Eric, Concord, Massachusetts 01742 (US)
(74) Representative: Gill Jennings & Every LLP

(57) **Abstract**

A millimeter-wave (mmW) imaging device comprises a mmW radar sensor, an auxiliary sensor arrangement, and at least one processor. The mmW radar sensor comprises a transmitter coupled to an antenna arrangement configured to transmit mmW radiation at a target, and a receiver coupled to the antenna arrangement or a separate antenna arrangement configured to receive backscatter radiation from the target. The auxiliary sensor arrangement is configured to detect one or both of relative motion and relative position between the imaging device and the target. A processor of the mmW imaging device is configured to receive data respectively produced by the mmW radar sensor and the auxiliary sensor arrangement during relative movement between the imaging device and the target. The processor or a remote processor is configured to reconstruct a mmW radar image of the target using the received data.

## Description

### TECHNICAL FIELD

This application relates generally to imaging devices and methods, including those that employ millimeter-wave radar sensors and target image reconstruction techniques.

### BACKGROUND

Millimeter-wave (mmW) imaging using conventional techniques (e.g., synthetic aperture radar or SAR, Inverse SAR or ISAR) require information on distance, motion profile, and, for some applications, orientation of the mmW reader compared to a target in order to perform radar data processing and image reconstruction of backscattered mmW signals. This required information constrains the imaging applications to configurations where distance and orientation have to be fixed and pre-known, and are not robust to changes in these parameters. For example, the reconstruction of SAR images depends on knowing the target distance and orientation from the imager. When using SAR to image planet earth from space, for example, this distance is known and predictable. However, when using SAR to image a chipless RFID (radio frequency identification) tag or a security flagged backpack, for example, the operator may not be able to maintain an exact distance while sweeping the imager across the target.

### SUMMARY

Embodiments are directed to a millimeter-wave (mmW) imaging device comprising a mmW radar sensor, an auxiliary sensor arrangement, and at least one processor. The mmW radar sensor comprises a transmitter coupled to an antenna arrangement configured to transmit mmW radiation at a target, and a receiver coupled to the antenna arrangement or a separate antenna arrangement configured to receive backscatter radiation from the target. The auxiliary sensor arrangement is configured to detect one or both of relative motion and relative position between the imaging device and the target. A processor of the mmW imaging device is configured to receive data respectively produced by the mmW radar sensor and the auxiliary sensor arrangement during relative movement between the imaging device and the target. The processor or a remote processor is configured to reconstruct a mmW radar image of the target using the received data.

Embodiments are directed to a mmW imaging device comprising a mmW radar sensor, an auxiliary sensor arrangement, and at least one processor. The mmW radar sensor comprises a transmitter coupled to an antenna arrangement configured to transmit mmW radiation at a chipless RFID tag, and a receiver coupled to the antenna arrangement or a separate antenna arrangement configured to receive backscatter radiation from the chipless RFID tag. The auxiliary sensor arrangement is configured to detect one or both of relative motion and relative position between the imaging device and the chipless RFID tag. The processor of the mmW imaging device is configured to receive data respectively produced by the mmW radar sensor and the auxiliary sensor arrangement during relative movement between the imaging device and the chipless RFID tag. The processor or a remote processor is configured to reconstruct a mmW radar image of the chipless RFID tag using the received data and decode data encoded in the chipless RFID tag.

Embodiments are directed to a method implemented by a mmW imaging device. The method comprises transmitting mmW radiation at a target during relative movement between the imaging device and the target, and producing backscatter radiation data in response to receiving backscatter radiation from the target. The method also comprises producing one or both of motion data and position data during relative movement between the imaging device and the target. The method further comprises reconstructing a mmW radar image of the target using the backscatter radiation data and one or both of the motion data and the position data. In some embodiments, the target comprises a chipless RFID tag and the method comprises decoding data encoded in the RFID tag.

The above summary is not intended to describe each disclosed embodiment or every implementation of the present disclosure. The figures and the detailed description below more particularly exemplify illustrative embodiments.

### BRIEF DESCRIPTION OF THE DRAWINGS

Throughout the specification reference is made to the appended drawings wherein:
Figure 1 is a block diagram of a mmW imaging device in accordance with any of the embodiments disclosed herein;
Figure 2 is a block diagram of a mmW imaging device being used in a scanning mode of operation in which there is relative movement between the mmW imaging device and a target in accordance with any of the embodiments disclosed herein;
Figure 3 illustrates various sensors that can be incorporated in an mmW imaging device in accordance with any of the embodiments disclosed herein;
Figure 4 shows a mmW imaging device configured for use with a target in the form of a chipless RFID tag in accordance with any of the embodiments disclosed herein; and
Figure 5 is a method implemented by a mmW imaging device in accordance with any of the embodiments disclosed herein.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

The capabilities and limitations of traditional imaging are well known, and only briefly described here for the sake of completeness. In "traditional" (i.e., non-radar) imaging, the object of interest is illuminated fully by a coherent (e.g., planar or spherical) wavefront, and the scattered (i.e., reflected or transmitted) wavefront is captured by the aperture of a physical lens. This received wavefront is spatially modulated (via refraction in a dielectric lens or diffraction in a meta-material lens) to compensate for the phase distortion in the scattered wave that is suffered in propagating from the object to the lens. With the phase information thus "corrected," the resulting optical wave in the image plane of the lens conveys the spatial structure of the object. This wave is then converted to electrical form (i.e., a digital image) via photo-detection. Advances in two-dimensional semiconductor focal-plane arrays as well as refractive and diffractive optics have enabled a steady improvement in the efficiency and the quality of this kind of imaging. However, the image resolution - a key performance metric - achievable through this approach is ultimately and fundamentally limited by the size of the physical lens aperture as well as by the size and the pixel density of the focal-plane array.

In radar imaging, one firstly combines the source and the detector of radiation into a single device: an antenna that transmits the incident wave and subsequently detects the backscattered wave at the same spatial location. It is noted that the extension of this to multiple-input multiple-output radar imaging systems is relatively recent. Secondly, arranging the antenna beam axis to be slanted at an angle between 0 and 90 degrees with respect to the normal to the nominal object plane allows one to form a mapping between the "down-range" or "cross-track" points in the object plane and time delays or frequency shifts in the received electrical signal, depending respectively on whether the transmitted signal is a narrow pulse or a chirped waveform. This is the basis of "range imaging." Finally, moving the antenna in a prescribed fashion in the "along-track" (a.k.a. azimuthal or "cross-range") direction relative to the object allows one to sample the backscattered wave in space, similar to what a lens does simultaneously. In this way, an effective aperture can be synthesized for capturing a larger portion of the backscattered wavefront than is possible by using a real lens of necessarily small size. This is the basis of high-resolution "cross-range imaging" in synthetic-aperture radar (SAR). The radar measurements are then digitally processed and assembled into an image. The obvious penalty paid for a much longer image acquisition time is often justified by the much finer image resolution achievable via SAR

The phase modulation that is performed by a lens in traditional imaging is performed by a computational algorithm in SAR imaging. In the most popular forms of SAR (strip-map, spotlight, circular), the motion of the radar platform is so simple as to result in an analytically expressible mapping between the platform positions and the (cross-range) image coordinates. Consequently, the phase modulation processing step can be expressed as a (sampled) Fourier transform, for which there are well-known and highly efficient computational implementations. The advancements in digital computing has therefore led to increasingly more efficient SAR processing codes over the decades. As the above description makes clear, however, the quality of the resulting SAR image depends critically on the accuracy of the relative phase information between measurements. Specifically, the relative position and orientation of the radar platform (including the slant angle) for all measurements must be known, to within a fraction of wavelength of radiation, in the three-dimensional object space in order for the SAR computational algorithm to properly reconstruct an image of the object. This requirement is the motivation behind this disclosure.

Embodiments of the disclosure are directed to imaging systems and methods that use a radar imaging sensor and one or more non-radar sensors to extract information that is used in the processing of radar data and image reconstruction. Embodiments are directed to imaging systems and methods that use a relative-target-to-radar motion profile, which includes one or both of range information and orientation information, in addition to radar data to reconstruct an image of a target. The relative-target-to-radar motion profile can be generated by one or more motion sensors, one or more position sensors, or a combination of motion and position sensors. Various types of targets are contemplated, including various objects, structures, and materials. Targets detected by an imaging system of the present disclosure include those that are separated from the imaging system by a barrier (e.g., a wall, container, luggage, clothing) which is substantially non-transmissive to visible light. Various types of information-containing targets are contemplated, including RFID tags (e.g., chipless RFID tags), in which case the imaging system includes a decoder for decoding data encoded in the information-containing targets. The imaging system may include a user interface comprising a display for displaying a reconstructed image of a target.

Embodiments are directed to a handheld, portable mmW imaging device that includes a mmW radar sensor and one or more non-radar sensors to extract information that is used in the processing of radar data and image reconstruction. The mmW imaging device comprises one or more processors configured to fuse data from the mmW radar sensor and one or more non-radar sensors to reconstruct a mmW radar image. The one or more processors are configured to combine data from one or more non-radar sensors to generate one or more of a target range, motion profile data, and orientation profile data that is used in the radar data processing and image reconstruction implemented by the one or more processors of the mmW imaging device. In some embodiments, the one or more processors are components of the handheld, portable mmW imaging device. In other embodiments, the processors used in the radar data processing and image reconstruction include at least one processor of the handheld, portable mmW imaging device and at least one remote processor, such as a processor of an external device or system or a cloud processor. For example, a processor of the handheld, portable mmW imaging device can be configured to preprocess data from the mmW radar sensor and one or more non-radar sensors, and a remote processor of an external system or device or a cloud processor can be configured to perform image reconstruction using the preprocessed data.

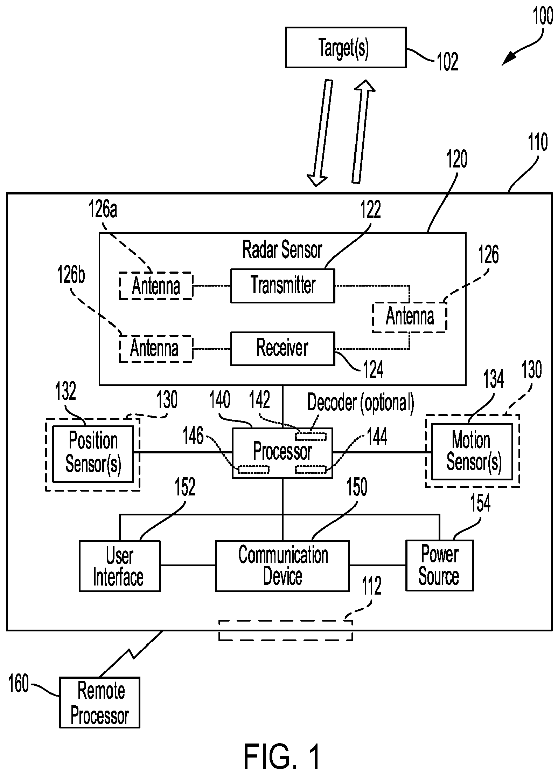

Figure 1 is a block diagram of a mmW imaging device 100 in accordance with any of the embodiments disclosed herein. The mmW imaging device 100 shown in Figure 1 is configured to image one or more targets 102. A target 102 can be any object, structure or material which can be detected using millimeter-wave imaging. For example, a target 102 can be an object, structure or material that is separated from the mmW imaging device 100 by a barrier which is substantially non-transmissive to visible light (e.g., making the target 102 non-viewable to the naked eye). The mmW imaging device 100 can be employed to image a target 102 separated from the mmW imaging device 100 by a wall, a garment, luggage, a backpack, a purse, a box or a container, for example. In some embodiments, a target 102 comprises an RFID tag, such as a chipless RFID tag. The mmW imaging device 100 can be employed to image the RFID tag and decode data encoded in the RFID tag. In other embodiments, the mmW imaging device 100 can be configured to detect variations in thickness of an object, structure or material subject to imaging without physically contacting the object, structure or material.

According to various embodiments, the mmW imaging device 100 is configured to transmit and receive RF signals in the range from about 24 GHz to about 300 GHz (e.g., the EHF or Extremely High Frequency range). Radio waves in this spectrum have wavelengths from about 10 to 1 millimeter. As such, radiation in this frequency band is referred to as millimeter waves. The mmW imaging device 100 can implement millimeter-wave imaging for detection of objects, for example, as well as the range, velocity, and angle of these objects. Due to the use of RF signals with short wavelengths, the mmW imaging device 100 can provide high resolution. The RF signals generated by the mmW imaging device 100 are able to penetrate various materials such as plastic, drywall, and clothing, and are impervious to environmental conditions such as rain, fog, dust and snow. The mmW imaging device 100 can be configured to be highly directional, such as by forming a compact beam with high angular accuracy. In some embodiments, the beam produced by the mmW imaging device 100 can be focused and steered using standard techniques including mechanical rotation and programmable phased array configurations. Although embodiments are directed to mmW imaging in this disclosure, it is understood that the imaging devices and methodologies disclosed herein can be implemented using RF signals that fall outside of the EHF range (e.g., the microwave band or terahertz band).

The mmW imaging device 100 shown in Figure 1 includes a mmW radar sensor 120 comprising a radio frequency (RF) transmitter 122 and an RF receiver 124. The transmitter 122 and receiver 124 are operatively coupled to an antenna arrangement 126. In some configurations, the transmitter 122 and receiver 124 are operatively coupled to the same antenna arrangement 126. In other configurations, the transmitter 122 is operatively coupled to a transmit antenna 126a, and the receiver 124 is operatively coupled to a receive antenna 126b. For convenience, the following discussion makes reference to antenna arrangement 126, it being understood that separate transmit and receive antennas 126a, 126b can be employed. It is understood that the transmitter 122 and receiver 124 can be packaged together as an RF transceiver. In some embodiments, the mmW radar sensor 120 can be configured as a mmW radar sensor antenna-on-package (AoP) module.

As is further shown in Figure 1, the mmW imaging device 100 includes an auxiliary sensor arrangement 130 operatively coupled to the processor 140. The auxiliary sensor arrangement 130 includes one or more non-radar sensors configured to produce auxiliary sensor data. Representative non-radar sensors include motion sensors, position sensors, and orientation sensors, examples of which are described below. The processor 140, alone or in cooperation with a remote processor 160, is configured to fuse data from the mmW radar sensor 120 and one or more non-radar sensors of the auxiliary sensor arrangement 130 to reconstruct a mmW radar image of the target 102. The remote processor 160 can be a processor of an external system or device (e.g., a smartphone, tablet, laptop, PC) or a cloud processor.

According to some embodiments, the processor 140 of the mmW imaging device 100 can be configured to preprocess data from the mmW radar sensor 120 and one or more non-radar sensors of the auxiliary sensor arrangement 130, and the remote processor 160 can be configured to fuse the preprocessed data received from the mmW imaging device 100 and reconstruct an image of the target 102 using the fused data. The mmW imaging device 100 can communicate the preprocessed data to the remote processor 160 via a communication device 150 (e.g., a wired or wireless communication interface). For example, the communication device 150 can be configured to establish a connection with the remote processor via public and/or private communication infrastructure (e.g., one or more of a local area network, a wide area network, the Internet).

In various embodiments, the auxiliary sensor arrangement 130 includes one or more motion sensors 134. The one or more motion sensors 134 are configured to produce data indicative of motion of the mmW imaging device 100 during imaging of the target 102. For example, the auxiliary sensor arrangement 130 can include one or more of an accelerometer arrangement, a gyro arrangement, a magnetometer arrangement, an inertial measurement unit (IMU), and a camera.

In various embodiments, the auxiliary sensor arrangement 130 includes one or more position sensors 132. The position sensor(s) 132 can be configured to produce data indicative of relative distance (range) between the mmW imaging device 100 and the target 102. For example, the position sensor(s) 132 of the auxiliary sensor arrangement 130 can include one or more of a stereoscopic camera arrangement, a laser sensor, and an ultrasonic sensor. In some embodiments, the processor 140 can be configured to produce data indicative of relative distance between the mmW imaging device 100 and the target 102 using known techniques (e.g., stretch processing, range compression) applied to the backscatter radiation data. In such embodiments, the mmW imaging device 100 serves as a position sensor, and a separate position sensor 132 need not be included. The relative distance between the mmW imaging device 100 and the target 102 provides the phase delta between the different azimuth measurements used to form the synthetic aperture in accordance with various embodiments.

In some embodiments, the auxiliary sensor arrangement 130 can include one or more sensors configured to produce data indicative of orientation of the mmW imaging device 100 relative to the target 102. For example, an orientation sensor of the auxiliary sensor arrangement 130 can include a camera or any of the sensors described above as position sensors.

In accordance with various embodiments, the mmW imaging device 100 includes at least one motion sensor 134. In accordance with some embodiments, the mmW imaging device 100 includes at least one position sensor 132. In accordance with further embodiments, the mmW imaging device 100 includes at least one motion sensor 134 and at least one position sensor 132. In accordance with various embodiments, the mmW imaging device 100 includes at least one motion sensor 134, at least one position sensor 132, and at least one orientation sensor. In some embodiments, position and/or motion can be determined by the mmW imaging device 100 through triangulation of a set of sensors situated in the environment (e.g., a room), exclusive of or in addition to one or more sensors of the auxiliary sensor arrangement 130.

The processor 140 can incorporate or be coupled to a sensor processor 146 configured to process signals or data received from the auxiliary sensor arrangement 130. The processor 140 and/or the sensor processor 146 can be implemented as or include one or more of a multi-core processor, a digital signal processor (DSP), a microprocessor, a programmable controller, a general-purpose computer, a special-purpose computer, a hardware controller, a software controller, a combined hardware and software device, such as a programmable logic controller, and a programmable logic device (e.g., FPGA, ASIC). The processor 140 and/or the sensor processor 146 can include or be operatively coupled to memory, such as RAM, SRAM, ROM, or flash memory. The processor 140 and/or sensor processor 146 can also be operatively coupled to a mass storage device, such as a solid-state drive (SSD).

The transmitter 122 and the antenna arrangement 126 are configured to transmit mmW radiation from a continuous-wave (for example FMCW, Stepped Frequency) or impulse source at a target 102. The receiver 124 and the antenna arrangement 126 are configured to receive backscatter radiation from the target 102. Backscatter radiation refers to the portion of the transmitted mmW radiation that the target 102 redirects directly back towards the antenna arrangement 126. Backscattering is the process by which backscatter is formed. The scattering cross section in the direction toward the mmW imaging device 100 is called the backscattering cross section (the usual notation is the symbol sigma, σ). The backscattering cross section is a measure of the reflective strength of the target 102. The normalized measure of the radar return from a distributed target 102 is called the backscatter coefficient (or sigma nought, σ⁰), which is the average radar cross-section of a set of objects defining the target 102 per unit area. If the signal formed by backscatter is undesired, it is called clutter. Other portions of the transmitted mmW radiation may be reflected and scattered away from the mmW imaging device 100 or absorbed.

Backscatter radiation data produced by the mmW radar sensor 120 is communicated to the processor 140. In some embodiments, the processor 140 incorporates or is coupled to a radar data processor 144. The radar data processor 144 is configured to process the backscatter radiation data using known techniques that depend on the transmitted signal.

As is further shown in Figure 1, the mmW imaging device 100 can include a user interface 152 operatively coupled to the processor 140. The user interface 152 can include manually actuatable switches (e.g., push buttons, toggle switches, capacitive switches), a display, a touch display, voice-activated controls, or any combination of these and other components. The mmW imaging device 100 also includes a power source 154, such as a conventional or rechargeable battery (e.g., lithium-ion battery) and/or a power converter for receiving power from a power line connection. The mmW imaging device 100 can include a communication device 150 configured to facilitate wired or wireless communication between the mmW imaging device 100 and an external system (e.g., a remote processor 160 as discussed hereinabove). For example, communication device 150 can incorporate a transceiver and an antenna configured to provide wireless communication in accordance with an IEEE 802.11 (e.g., WiFi®) or Bluetooth® (e.g., BLE, Bluetooth® 4. 2, 5.0. 5.1, 5.2 or later) specification. The communication device 150 can incorporate a hardwired communication interface, such as a USB interface.

The mmW imaging device 100 includes a housing 110 configured to contain and/or support the various components shown in Figure 1. In some embodiments, the housing 110 is configured for hand-held manipulation by a user of the mmW imaging device 100. For example, the housing 110 can be configured to facilitate grasping and manipulation of the mmW imaging device 100 in a manner similar to a conventional electronic stud finder. In other embodiments, the housing 110 can include a mounting connector 112 configured to facilitate mounting of the mmW imaging device 100 on a support structure (e.g., a tripod, a structure fixture, a machine fixture).

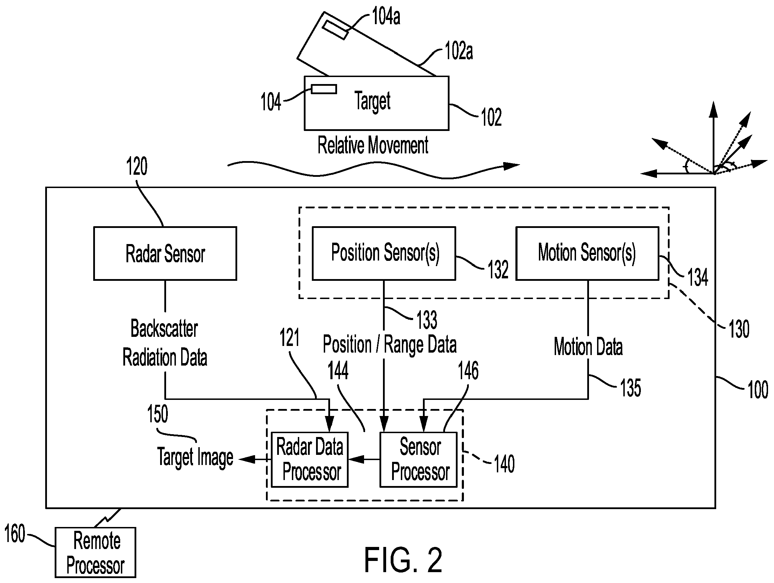

Referring now to Figure 2, the mmW imaging device 100 is particularly useful in a scanning mode of operation in which there is relative movement between the mmW imaging device 100 and a target 102. In some scenarios, mmW imaging device 100 may be subject to moving by a user or a mechanism relative to a stationary target 102. In other scenarios, the mmW imaging device 100 may be stationary (e.g., positioned on a tripod or static structure) and the target 102 may be moving. In further scenarios, the mmW imaging device 100 and the target 102 may be moving. In each of these scenarios, various mmW imaging techniques can be implemented by the mmW imaging device 100, alone or in cooperation with a remote processor 160, to reconstruct an image of the target 102. Representative imaging techniques include SAR and ISAR. Such imaging techniques are used in order to increase the imaging resolution without increasing the real antenna aperture (antenna size) and thus do not negatively affect the system SWaP (Size, Weight, and Power) by increasing it.

Increased resolution is achieved by synthesizing a larger aperture than the real antenna aperture by moving the antenna a certain length along the azimuth direction, which is perpendicular to range direction, and conducting multiple measurements. The data from these multiple measurements, in particular the variations in phase with frequency and with antenna position, contain sufficient information to allow reconstruction of the positions of scatterers (e.g., targets) relative to the antenna motion path at high resolution, as if all the measurements were taken simultaneously with a single larger synthetic aperture. The phase information for these multiple measurements is a function of range, motion profile for more complex scenarios, and potentially object orientation for more complex targets. Thus, this information is used in addition to the radar data to enable reconstruction of the target image.

Existing synthetic aperture and related radar imaging techniques require that the relative motion between the antenna and the target be one dimensional and linear. Such a configuration provides a straightforward relationship between combined phase data and scatterer position. However, a linear relationship is not required in accordance with embodiments of the disclosure. The distance and/or relative motion between the radar and the target or scene is sufficient to enable reconstruction of the target image for arbitrary relative motion paths. The use of one or more non-radar sensors (e.g., auxiliary sensors such as motion, position, and/or orientation sensors) of the mmW imaging device 100 provides the necessary auxiliary information. The auxiliary sensors can provide information on relative radar-target motion profile which is fed into the radar image reconstruction algorithms in order to generate the radar image. In addition to motion profile, for some applications like chipless RFID, the auxiliary sensors can also register and provide information about the orientation of the target tag.

It is understood that the mmW imaging device 100 can be useful in a static mode of operation in which there is no relative movement between the mmW imaging device 100 and the target 102. This can be accomplished, for example, by achieving a large antenna aperture through the application of multiple antennas for transmission (Tx) and reception (Rx), in which the total aperture size, and thus the resolution, will be a function of the number of Tx antennas multiplied by the number of Rx antennas.

In the context of a scanning mode of operation, the processor 140 is configured to receive data respectively produced by the mmW radar sensor 120 and the auxiliary sensor arrangement 130 during relative movement between the mmW imaging device 100 and the target 102. As is shown in Figure 2, the processor 140 receives backscatter radiation data 121 from the mmW radar sensor 120. The processor 140 also receives sensor data from the auxiliary sensor arrangement 130 during relative movement between the mmW imaging device 100 and the target 102. In some embodiments, the processor 140 receives motion data 135 from one or more motion sensors 134. In other embodiments, the processor 140 receives position data 133 from one or more position sensors 132, exclusive of or in addition to motion data 135 from one or more motion sensors 134. In either of these scenarios, the processor 140 may also receive orientation data from one or more orientation sensors. The processor 140 is configured to reconstruct a mmW radar image of the target 102 using the backscatter radiation data 121 and sensor data received from the auxiliary sensor arrangement 130.

For example, the processor 140 is configured to receive a plurality of samples of data produced by the mmW radar sensor 120 and the auxiliary sensor arrangement 130 during relative movement between the mmW imaging device 100 and the target 102. For example, a hand-held mmW imaging device 100 may be moved across a structural wall by a user over a scan length of 10 cm during which 100 or more samples of backscatter radiation data and auxiliary sensor arrangement data are captured. Each of the samples comprises backscatter radiation data 121 and auxiliary sensor arrangement data 133 and/or 135. The auxiliary sensor arrangement data 133 and/or 135 can include data indicative of relative distance and/or motion between the mmW imaging device 100 and the target 102. In some embodiments, the auxiliary sensor arrangement data can also include data indicative of orientation between the mmW imaging device 100 and the target 102. It is noted that, in some embodiments, data indicative of relative distance between the mmW imaging device 100 and the target 102 can be generated by the processor 140 using backscatter radiation data 121 using known techniques (e.g., stretch processing, range compression). The processor 140 is configured to reconstruct a two-dimensional (2-D) mmW radar image of the target 102 using the plurality of samples.

According to some embodiments, one or more of the motion sensors 132 (e.g., camera, gyro, IMU) can serve as an orientation sensor(s). For example, a camera can serve as a motion sensor 132 and/or an orientation sensor. When used as an orientation sensor, a camera can capture images of a target 102 as the orientation of the target 102 changes during relative movement between the mmW imaging device 100 and the target 102. The target 102 may include an optical feature 104 (e.g., a geometric pattern) which is readily captured by the camera. Changes in the orientation of the optical feature 104 captured by a series of image samples captured by the camera correspond to changes in the orientation of the mmW imaging device 100. The magnitude and direction of these changes in the orientation of the optical feature 104 are calculated by the processor 140. The one or more motion sensors 134 can be configured to measure linear acceleration, exclusive of or in addition to rotational rate of the mmW imaging device 100. The one or more motion sensors 134 can be configured to measure any combination of roll, pitch, heading, position, and velocity of the mmW imaging device 100.

In some embodiments, and as shown in Figure 2, the processor 140 can include a sensor processor 146 operatively coupled to the auxiliary sensor arrangement 130 and a radar processor 144 operatively coupled to the mmW radar sensor 120. The sensor processor 146 receives one or both of position data 133 and motion data 135 from one or more position sensors 132 and/or one or more motion sensors 134 of the auxiliary sensor arrangement 130. Orientation data produced by a motion sensor 134 or a position sensor 132 can optionally be received by the processor 146. The position data and/or motion data (and optional orientation data) processed by the sensor processor 146 is communicated to the radar processor 144. The radar processor 144 is configured to implement a sensor fusion algorithm that processes the backscatter radiation data 121 and data received from the sensor processor 146 to reconstruct an image of the target 102. Target image data 150 produced by the radar data processor 144 can be communicated to other components of the mmW imaging device 100, such as a display (e.g., user interface 152) and/or a communication device (e.g., communication device 150).

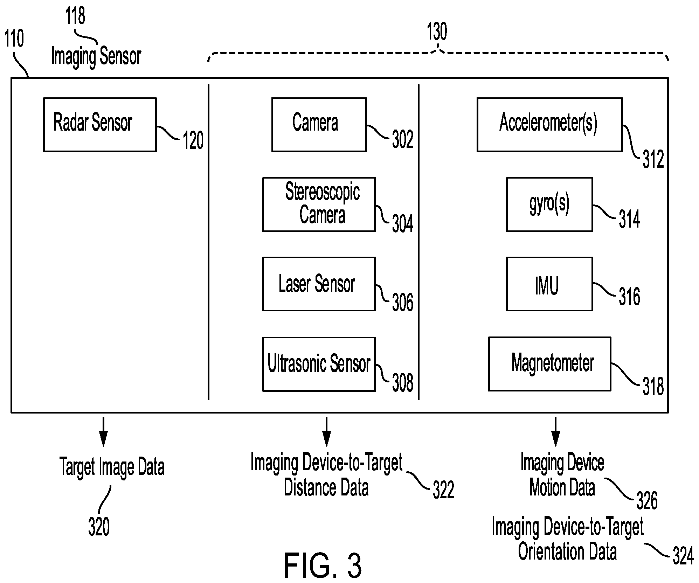

Figure 3 illustrates various sensors that can be incorporated in the mmW imaging device 100 according to various embodiments. The mmW imaging device 100 includes an imaging sensor 118, such as the mmW radar sensor 120 described previously, which is configured to produce target image data 320. The mmW radar sensor 120 can be implemented using available mmW radar devices or chips that integrate RF transmitter and receiver analog components (e.g., clocking components) and digital components (e.g., ADC, microcontroller, hardware accelerator). Available mmW radar devices or chips can also integrate a digital signal processor (DSP) to provide additional signal processing capabilities. In some configurations, the mmW radar sensor 120 can be implemented as a frequency modulated continuous wave (FMCW) radar sensor. In other configurations, the mmW radar sensor 120 can be implemented as a pulsed radar sensor. Representative components of the mmW radar sensor 120 can include, for example, a single-chip radar sensor available from Texas Instruments (e.g., models IWR1843, IWR6843, IWR6843AoP, IWR1443, IWR1642).

The mmW imaging device 100 includes an auxiliary sensor arrangement 130 which can be configured to provide one or any combination of imaging device-to-target motion data 326, imaging device-to-target distance data 322, and imaging device-to-target orientation data 324. The auxiliary sensor arrangement 130 can include one or any combination of motion, position, and orientation sensors.

The auxiliary sensor arrangement 130 can include one or more motion sensors configured to produce image device motion data 326. The auxiliary sensor arrangement 130 can include one or more accelerometers 312, one or more gyros 314, and/or one or more magnetometers 318. According to some embodiments, the auxiliary sensor arrangement 130 includes an IMU 316 configured to measure at least the linear acceleration of the mmW imaging device 100. In addition to measuring linear acceleration, the IMU 316 can be configured to measure the rotational rate of the mmW imaging device 100. In some implementations, the IMU 316 can be configured to measure the linear acceleration, the rotational rate, and the heading of the mmW imaging device 100. For example, the IMU 316 can include one or more of an accelerometer, a gyroscope, and a magnetometer per each of three orthogonal axes. Some implementations of the IMU 316 can provide roll, pitch, heading, position, and velocity of the mmW imaging device 100. Suitable IMUs are available from SBG systems (e.g., Ellipse, Ekinox, and Apogee series IMUs) and Aceinna (e.g., OpenIMU models 330B, 300ZI, 300RI, and 381ZA). A camera 302 can also serve as a motion sensor.

The auxiliary sensor arrangement 130 can include one or more position sensors configured to produce imaging device-to-target distance data 322. The auxiliary sensor arrangement 130 can include one or more of a stereoscopic camera 304, a laser sensor 306, and an ultrasonic sensor 308. Suitable stereoscopic cameras 304 are available from DUO (e.g., models DDK, MLX, MC, and M ultra-compact stereoscopic imaging sensors). The laser sensor 306 can be implemented as a laser distance sensor and/or laser displacement sensor, for example. Suitable laser sensors 306 are available from Micro-Epsilon (e.g., optoNCDT laser sensors). Suitable ultrasonic sensors 308 are available from Texas Instruments (e.g., PGA460, TDC1000).

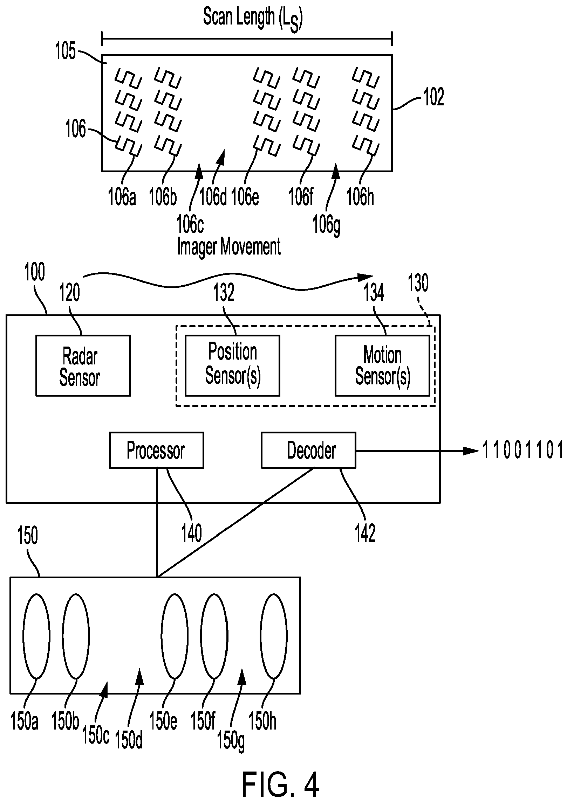

Figure 4 shows a mmW imaging device 100 configured for use with a target 102 in the form of a chipless RFID tag. Chipless RFID is a wireless data capturing technique applying electromagnetic waves to extract data encoded in a tag. The chipless RFID tag 102 shown in Figure 4 includes an arrangement of elements or glyphs 106. The glyphs 106 typically comprise a patterned conductive material disposed on a substrate 105 (e.g., a dielectric substrate). The glyphs 106 may be formed on a wide variety of substrates 105, e.g., paper, cardboard, a package, paper cup, a pallet, an article of clothing. The glyphs 106 may be fabricated from printed inks comprising a conductive material. In some implementations, the printed traces can include one or more of nickel, carbon, carbon nanotubes, and silver nanowires. The glyphs 106 can be fabricated by etching metal on a dielectric substrate 105. For example, the glyphs 106 can be fabricated by etching copper or aluminum. The glyphs 106 can be fabricated by etching a transparent conductor such as indium-tin oxide, for example. In some implementations, the glyphs 106 can be fabricated with a thermal transfer process using conductive ribbons of one or more of copper, aluminum, gold, and/or silver, for example.

The mmW imaging device 100 shown in Figure 4 includes a mmW radar sensor 120 and an auxiliary sensor arrangement 130, both of which are previously described. The auxiliary sensor arrangement 130 can include one or more position sensors 132 and/or one or more motion sensors 134 (and optionally one or more orientation sensors), as discussed previously. The processor 140 can incorporate or be coupled to a sensor processor (coupled to the auxiliary sensor arrangement 130) and a radar data processor (coupled to the mmW radar sensor 120), as previously discussed (see Figure 2). In the embodiment shown in Figure 4, the processor 140 includes or is coupled to a decoder 142. In other embodiments, the processor 140 of the mmW imaging device 100 cooperates with a remote processor as previously discussed.

In the embodiment shown in Figure 4, the glyphs 106 are arranged to encode information spatially on the substrate 105 of the chipless RFID tag 102. The representative chipless RFID tag 102 shown in Figure 4 includes n=8 columns, 106a-106h, and m=4 rows. The presence of a glyph 106 within a column may be used to encoded a binary '1' value. The absence of a glyph 106 within a column may be used to encode a binary '0' value. In this illustrative example, the chipless RFID tag 102 encodes the 8-bit binary value '11001101'.

The transmitter of the mmW radar sensor 120 is configured to transmit mmW radiation at the chipless RFID tag 102. The receiver of the mmW radar sensor 120 is configured to receive backscatter radiation from the chipless RFID tag 102. The processor 140 is configured to receive data respectfully produced by the mmW radar sensor 120 and the auxiliary sensor arrangement 130 during relative movement between the mmW imaging device 100 and the chipless RFID tag 102. The processor 140 (or a remote processor) is also configured to reconstruct a 2-D mmW radar image 150 of the chipless RFID tag 102 using the received data. The representative 2-D mmW radar image 150 in Figure 4 shows images and absent images 150a-150g corresponding to glyphs and absent glyphs 106a-106h of the chipless RFID tag 102. The decoder 142, integral or coupled to the processor 140 (or a remote processor), is configured to decode data encoded in the chipless RFID tag 102. In this representative example, the decoder 142 decodes the 8-bit binary value '11001101' encoded in the chipless RFID tag 102.

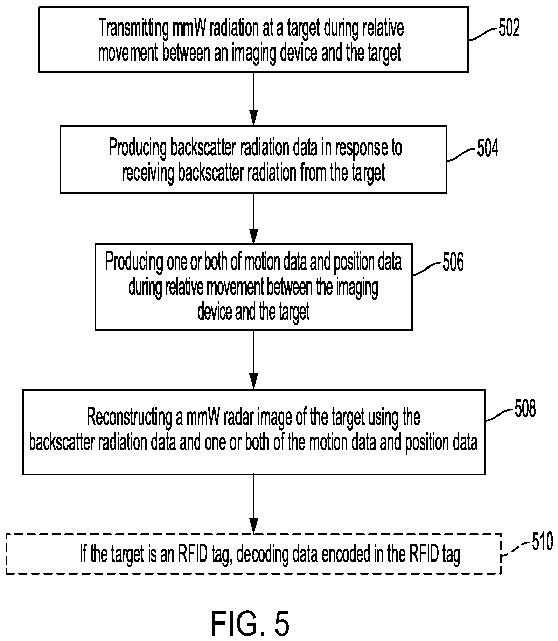

Figure 5 is a method implemented by a mmW imaging device in accordance with any of the embodiments disclosed herein. The method shown in Figure 5 involves transmitting 502 mmW radiation at a target during relative movement between the mmW imaging device and the target. The method involves producing 504 backscatter radiation data in response to receiving backscatter radiation from the target. The method also involves producing 506 auxiliary sensor data in the form of one or both of motion data and position data during relative movement between the imaging device and the target. The method further involves reconstructing 508 a mmW radar image of the target using the backscatter radiation data and one or both of the motion data and the position data. If the target is an RFID tag, such as a chipless RFID tag, the method also involves decoding 510 data encoded in the RFID tag.

Although reference is made herein to the accompanying set of drawings that form part of this disclosure, one of at least ordinary skill in the art will appreciate that various adaptations and modifications of the embodiments described herein are within, or do not depart from, the scope of this disclosure. For example, aspects of the embodiments described herein may be combined in a variety of ways with each other. Therefore, it is to be understood that, within the scope of the appended claims, the claimed invention may be practiced other than as explicitly described herein.

All references and publications cited herein are expressly incorporated herein by reference in their entirety into this disclosure, except to the extent they may directly contradict this disclosure. Unless otherwise indicated, all numbers expressing feature sizes, amounts, and physical properties used in the specification and claims may be understood as being modified either by the term "exactly" or "about." Accordingly, unless indicated to the contrary, the numerical parameters set forth in the foregoing specification and attached claims are approximations that can vary depending upon the desired properties sought to be obtained by those skilled in the art utilizing the teachings disclosed herein or, for example, within typical ranges of experimental error.

The recitation of numerical ranges by endpoints includes all numbers subsumed within that range (e.g. 1 to 5 includes 1, 1.5, 2, 2.75, 3, 3.80, 4, and 5) and any range within that range. Herein, the terms "up to" or "no greater than" a number (e.g., up to 50) includes the number (e.g., 50), and the term "no less than" a number (e.g., no less than 5) includes the number (e.g., 5).

The terms "operatively coupled" or "connected" refer to elements being attached to each other either directly (in direct contact with each other) or indirectly (having one or more elements between and attaching the two elements). Either term may be modified by "operatively" and "operably," which may be used interchangeably, to describe that the coupling or connection is configured to allow the components to interact to carry out at least some functionality (for example, a radio chip may be operably operatively coupled to an antenna element to provide a radio frequency electromagnetic signal for wireless communication).

Terms related to orientation, such as "top," "bottom," "side," and "end," are used to describe relative positions of components and are not meant to limit the orientation of the embodiments contemplated. For example, an embodiment described as having a "top" and "bottom" also encompasses embodiments thereof rotated in various directions unless the content clearly dictates otherwise.

Reference to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout are not necessarily referring to the same embodiment of the disclosure. Furthermore, the particular features, configurations, compositions, or characteristics may be combined in any suitable manner in one or more embodiments.

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

As used herein, "have," "having," "include," "including," "comprise," "comprising" or the like are used in their open-ended sense, and generally mean "including, but not limited to." It will be understood that "consisting essentially of," "consisting of," and the like are subsumed in "comprising," and the like. The term "and/or" means one or all of the listed elements or a combination of at least two of the listed elements.

The phrases "at least one of," "comprises at least one of," and "one or more of' followed by a list refers to any one of the items in the list and any combination of two or more items in the list.

## Claims

1. A millimeter-wave (mmW) imaging device, comprising:
a mmW radar sensor comprising:
a transmitter coupled to an antenna arrangement configured to transmit mmW radiation at a target; and
a receiver coupled to the antenna arrangement or a separate antenna arrangement configured to receive backscatter radiation from the target;
an auxiliary sensor arrangement configured to detect one or both of relative motion and relative position between the imaging device and the target; and
a processor configured to receive data respectively produced by the mmW radar sensor and the auxiliary sensor arrangement during relative movement between the imaging device and the target, the processor or a remote processor configured to reconstruct a mmW radar image of the target using the received data.

2. The imaging device of claim 1, wherein the processor is configured to reconstruct the mmW radar image of the target using the received data.

3. The imaging device of claim 1, comprising:
a communication device coupled to the processor and configured to communicatively couple the imaging device with the remote processor, wherein:
the processor is configured to preprocess the data respectively produced by the mmW radar sensor and the auxiliary sensor arrangement; and
the remote processor is configured to reconstruct the mmW radar image of the target using the preprocessed data.

4. The imaging device of claim 1, wherein:
the auxiliary sensor arrangement comprises a position sensor; and
the position sensor is configured to produce data indicative of relative distance between the imaging device and the target.

5. The imaging device of claim 4, wherein the position sensor comprises one or more of a stereoscopic camera arrangement, a laser sensor, and an ultrasonic sensor.

6. The imaging device of claim 1, wherein:
the auxiliary sensor arrangement comprises the motion sensor; and
the motion sensor is configured to produce data indicative of motion of the imaging device during imaging of the target.

7. The imaging device of claim 6, wherein the motion sensor comprises one or more of an accelerometer arrangement, a gyro arrangement, an inertial measurement unit, a magnetometer arrangement, and a camera.

8. The imaging device of claim 1, wherein:
the auxiliary sensor arrangement comprises an orientation sensor; and
the orientation sensor is configured to produce data indicative of orientation of the imaging device relative to the target.

9. The imaging device of claim 8, wherein the orientation sensor comprises one or more of a camera, an accelerometer arrangement, a gyro arrangement, an inertial measurement unit, and a magnetometer arrangement.

10. The imaging device of claim 1, wherein the auxiliary sensor arrangement comprises at least two of a position sensor, a motion sensor, and an orientation sensor.

11. The imaging device of claim 1, wherein the auxiliary sensor arrangement comprises one or any combination of an accelerometer arrangement, a gyro arrangement, an inertial measurement unit, a magnetometer arrangement, and a camera, an optical sensor, a stereoscopic camera arrangement, a laser sensor, and an ultrasonic sensor.

12. The imaging device of claim 1, comprising:
a housing configured to contain or support the mmW radar sensor, the auxiliary sensor arrangement, and the processor;
wherein the housing is configured for hand-held manipulation by a user of the imaging device.

13. The imaging device of claim 1, comprising:
a housing configured to contain or support the mmW radar sensor, the auxiliary sensor arrangement, and the processor;
wherein the housing is configured for mounting on a support structure.

14. A millimeter-wave (mmW) imaging device, comprising:
a mmW radar sensor comprising:
a transmitter coupled to an antenna arrangement configured to transmit mmW radiation at a chipless RFID tag; and
a receiver coupled to the antenna arrangement or a separate antenna arrangement configured to receive backscatter radiation from the chipless RFID tag;
an auxiliary sensor arrangement configured to detect one or both of relative motion and relative position between the imaging device and the chipless RFID tag;
a processor configured to receive data respectively produced by the mmW radar sensor and the auxiliary sensor arrangement during relative movement between the imaging device and the chipless RFID tag; and
the processor or a remote processor configured to:
reconstruct a mmW radar image of the chipless RFID tag using the received data; and
decode data encoded in the chipless RFID tag.

15. The imaging device of claim 14, wherein the processor is configured to reconstruct the mmW radar image of the chipless RFID tag using the received data.

16. The imaging device of claim 14, comprising:
a communication device coupled to the processor and configured to communicatively couple the imaging device with the remote processor, wherein:
the processor is configured to preprocess the data respectively produced by the mmW radar sensor and the auxiliary sensor arrangement; and
the remote processor is configured to:
reconstruct the mmW radar image of the chipless RFID tag using the preprocessed data; and
decode the data in the chipless RFID tag.

17. The imaging device of claim 14, wherein:
the auxiliary sensor arrangement comprises a position sensor; and
the position sensor is configured to produce data indicative of relative distance between the imaging device and the chipless RFID tag.

18. The imaging device of claim 14, wherein:
the auxiliary sensor arrangement comprises the motion sensor; and
the motion sensor is configured to produce data indicative of motion of the imaging device during imaging of the chipless RFID tag.

19. The imaging device of claim 14, wherein:
the auxiliary sensor arrangement comprises an orientation sensor; and
the orientation sensor is configured to produce data indicative of orientation of the imaging device relative to the chipless RFID tag.

20. The imaging device of claim 14, wherein the auxiliary sensor arrangement comprises one or any combination of an accelerometer arrangement, a gyro arrangement, an inertial measurement unit, a magnetometer arrangement, and a camera, an optical sensor, a stereoscopic camera arrangement, a laser sensor, and an ultrasonic sensor.

21. A method implemented by a millimeter-wave (mmW) imaging device, comprising:
transmitting mmW radiation at a target during relative movement between the imaging device and the target;
producing backscatter radiation data in response to receiving backscatter radiation from the target;
producing one or both of motion data and position data during relative movement between the imaging device and the target; and
reconstructing a mmW radar image of the target using the backscatter radiation data and one or both of the motion data and the position data.

22. The method of claim 21, wherein producing the backscatter radiation data, producing one or both of motion data and position data, and reconstructing the mmW radar image of the target are implemented by the imaging device.

23. The method of claim 21, wherein:
producing the backscatter radiation data and producing one or both of motion data and position data are implemented by the imaging device; and
reconstructing the mmW radar image of the target is implemented by a remote device or system.

24. The method of claim 21, wherein:
the target comprises a chipless RFID tag; and
the method comprises decoding data encoded in the chipless RFID tag.
